# EUROPÄISCHE PATENTANMELDUNG

(11) **EP 1 432 231 A2**
(43) Veröffentlichungstag der Anmeldung: **23.06.2004**
(21) Anmeldenummer: 03028429.3
(22) Anmeldetag: 11.12.2003
(51) Int. Cl.: H04N 1/19

(54) **Einrichtung und Verfahren zur störungsarmen Aufnahme von hochaufgelösten zweidimensionalen Bildern**

(30) Priorität: 20.12.2002 DE 10261665
(71) Anmelder: Smiths Heimann Biometrics GmbH, 07743 Jena (DE)
(72) Erfinder: Meister, Andreas, 07745 Jena (DE); Standau, Jörg, 07743 Jena (DE)
(74) Vertreter: Freitag, Joachim, Dipl.-Phys.

(57) **Zusammenfassung**

Die Erfindung betrifft eine Einrichtung zur Aufnahme von hochaufgelösten zweidimensionalen Bildern mit bewegtem Bildsensor sowie ein Verfahren zum Erzeugen optimierter Scanmuster für zweidimensional scannende Bildaufnahmesysteme.
Die Aufgabe, eine neue Möglichkeit zur Aufnahme von hochaufgelösten Bildern mit auflösungserhöhender zweidimensionaler Sensorbewegung zu finden, die mit einfachen Mitteln eine deutliche Verringerung von Bildstörungen, die bei einer Bewegung des Objekts während der Scanbewegung des Bildsensors entstehen, erreicht, wird erfindungsgemäß gelöst, indem bei einem gewählten Scanraster (12) mit n Scanpositionen (14) in x-Richtung und m Scanpositionen (14) in y-Richtung ein Scanmuster (3) für die Sensorbewegung vorhanden ist, das in Form von Abtastzahlen (31) eine feste Reihenfolge der anzufahrenden Scanpositionen (14) aufweist, wobei für örtlich benachbarte Scanpositionen (14) in x-Richtung und in y-Richtung jeweils ein zeitlicher Abstand (32) von mindestens zwei Scanschritten (13) vorhanden ist.

## Beschreibung

Die Erfindung betrifft eine Einrichtung zur Aufnahme von hochaufgelösten zweidimensionalen Bildern mit bewegtem Bildsensor sowie ein Verfahren zum Erzeugen optimierter Scanmuster für zweidimensional scannende Bildaufnahmesysteme, insbesondere zur Aufnahme von Finger-, Hand- oder Fußabdrücken oder anderen geometrisch hochgenau auszuwertenden Bildern, bei denen eine Bewegung nicht ausgeschlossen werden kann.

Für die hochaufgelöste Bildaufnahme von Objekten, wie z.B. Finger- und Handabdrücken, können verschiedene Aufnahmeverfahren eingesetzt werden. So ist es beispielsweise möglich, mit hochauflösenden Bildsensoren ein Einzelbild des gesamten Objektes aufzunehmen. Allerdings gilt dabei auch heute noch die Regel, dass hinreichend hochauflösende Bildsensoren mit entsprechenden Parametern nur zu sehr hohen Kosten verfügbar sind. Um das zu umgehen, kann ein hochaufgelöstes Bild auch aus mehreren zeitlich nacheinander und örtlich versetzt aufgenommenen Bildern mit geringerer Auflösung zusammengesetzt werden. Dabei wird der Bildsensor zwischen einzelnen Bildaufnahmen verschoben, um mehrere Bilder nacheinander aufzunehmen, die dann zum Ergebnisbild zusammengesetzt werden.

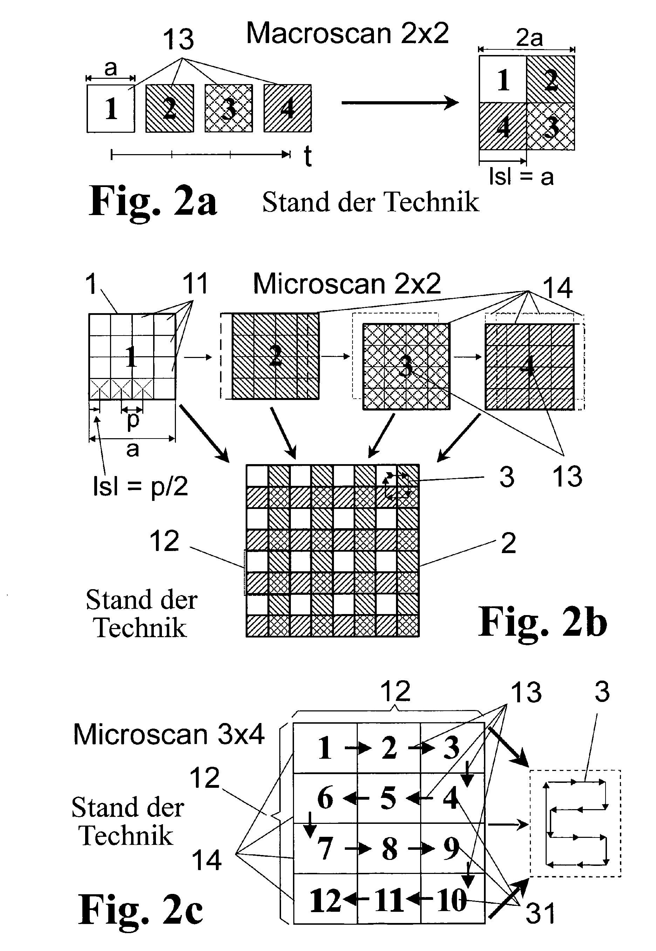

Das Zusammensetzen der Einzelbilder ist auf zwei Arten möglich:
1. Macroscan - Bewegung der Kamera um Vielfache der Sensorgröße, benachbartes Aneinandersetzen ganzer Einzelbilder, (siehe Fig. 2a, Beispiel für 2x2 Scanpositionen),
2. Microscan - Bewegung der Kamera um einen Bruchteil des Sensorelement-(Pixel-) Abstandes, bildpunktweises Zusammensetzen (Verkämmen) der Einzelbilder, (siehe Fig. 2b, Beispiel für 2x2 Scanpositionen).

Die vorgenannten Verfahren sind scannende (d.h. durch Sensorbewegung abtastende) Aufnahmeverfahren, da der Kamera-Bildsensor für die Aufnahme eines kompletten Bildes mehrfach verschoben wird. Die Aufnahme hochaufgelöster Bilder mit scannenden Aufnahmeverfahren kommt vor allem bei der Erfassung von ruhenden oder wenig bewegten Bildobjekten zum Einsatz.

Das Microscan-Verfahren wurde entwickelt, um mit verfügbaren niedrig auflösenden Kamerasensoren (mit geringer Pixeldichte) eine hohe optische Bildauflösung des Ergebnisbildes zu erzielen. Das Hauptaugenmerk bei der Ausführung der mechanischen Abtastbewegung des Microscan-Verfahrens ist auf eine Minimierung der Abtastwege der Kamera und somit auf eine Minimierung der Scan- und der Bildaufnahmezeit gerichtet. Dazu wird die Kamera bei der Bildaufnahme beginnend bei Position 1 mäanderförmig bewegt (siehe Fig. 2c zur Veranschaulichung eines 3x4-Bildscans).
Das Microscan-Verfahren wird vor allem bei kleinen Objekten mit hohen Auflösungsanforderungen verwendet und berücksichtigt die Tatsache, dass herkömmlich verfügbare Bildsensoren (insbesondere CCD-Sensoren) zwischen den lichtempfindlichen Bildsensorelementen lichtunempfindliche Bereiche aufweisen, die der Ableitung der Signale der Sensorelemente dienen. Eine Zwischenabtastung durch Verschiebung des Bildsensors um Bruchteile seines Pixelrasters führt schon wegen der inhomogenen Empfindlichkeitsverteilung innerhalb jedes Sensorelements in jedem Fall zur Auflösungssteigerung und wird deshalb bevorzugt in Abtastern für Fingerabdrücke (sogenannten Livescannern oder Fingerprintsensoren) eingesetzt, um Finger-, Hand- und Fußabdrücke mit hoher optischer Auflösung aufnehmen zu können.
Als nachteilig stellt sich jedoch das Verhalten des Microscan-Verfahrens heraus, wenn das aufzunehmende Objekt, wie im konkreten Fall ein Finger- oder Handabdruck, während der Aufnahme bewegt wird. Je nach Art und Geschwindigkeit der Bewegung kommt es zu mehr oder weniger ausgeprägten Störungen im aufgenommenen Bild.
Nachweisbar ist, dass schon eine geringe (meist unbewusste) Bewegung während der Bildaufnahme zu einer ausgeprägten Bildung von linienförmigen Artefakten führt. Diese Effekte sind dabei besonders in der Richtung ausgeprägt, in der die Scanschritte mehrheitlich zeitlich unmittelbar aufeinander folgen, d.h. in Richtung der parallelen Mäanderbahnen. Die aufgenommenen Bilder erwecken dann den Eindruck, dass die Bildaufnahme-Hardware nicht ordnungsgemäß funktioniert oder Digitalisierungsfehler aufgetreten sind.

Der Erfindung liegt die Aufgabe zugrunde, eine neue Möglichkeit zur Aufnahme von hochaufgelösten zweidimensionalen Bildern mit auflösungserhöhender zweidimensionaler Sensorbewegung zu finden, die mit einfachen Mitteln eine deutliche Verringerung von Bildstörungen, die bei der Bewegung des Objekts während der Scanbewegung des Bildsensors entstehen, erreicht.

Erfindungsgemäß wird die Aufgabe mit einer Einrichtung zur Aufnahme von hochaufgelösten zweidimensionalen Bildern, bei der für eine auflösungserhöhende Vervielfachung der abgetasteten Bildpunkte ein Scanmechanismus zur zweidimensionalen Bewegung des Bildsensors vorhanden ist, dadurch gelöst, dass bei einem gewählten Scanraster mit n Scanpositionen in x-Richtung und m Scanpositionen in y-Richtung ein Scanmuster für die Sensorbewegung vorhanden ist, das in Form von Abtastzahlen eine feste Reihenfolge der angefahrenen Scanpositionen aufweist, wobei für örtlich benachbarte Scanpositionen in x-Richtung und in y-Richtung jeweils ein zeitlicher Abstand, verkörpert als Differenz der Abtastzahlen, von mindestens zwei Scanschritten vorhanden ist.

Vorteilhaft ist das Scanmuster für ein vorgegebenes Scanraster (n x m) so optimiert, dass die zeitlichen Abstände zwischen jeweils örtlich benachbarten Scanpositionen in x- und in y-Richtung im gesamten Scanmuster ein Maximum und ein Minimum aufweisen, die möglichst nahe beieinander liegen.
Das vorstehend charakterisierte Scanmuster wird vorzugsweise für Bildaufnehmer mit einem nxm-Microscan verwendet. Es kann aber auch sinnvoll für einen vorgegebenen nxm-Macroscan eingesetzt werden.
Vorteilhaft ist das so gestaltete Scanmuster in die Ansteuersoftware für den Scanmechanismus des Bildsensors integriert.

Ferner wird die Aufgabe mit einem Verfahren zum Erzeugen eines optimierten Scanmusters für zweidimensional abtastende Bildaufnahmesysteme, bei dem eine Auflösungserhöhung durch Bewegung des Bildsensors in einem bestimmten Scanraster erfolgt und bewegungsbedingte Artefakte unterdrückt werden, durch folgende Schritte gelöst:
- Aufstellen aller möglichen Scanmuster für den Bildsensor über alle Permutationen von nxm Scanpositionen für ein vorgegebenes Scanraster (nxm), wobei die zeitliche Reihenfolge der Scanpositionen durch eine Abtastzahl als laufende Nummer des Scanschrittes gekennzeichnet wird,
- Berechnen aller Differenzen der Abtastzahlen benachbarter Scanpositionen für jedes Scanmuster in x-Richtung und in y-Richtung des Scanrasters,
- Bestimmung von Minimum und Maximum aller Differenzen von Abtastzahlen zur Klassifikation jedes Scanmusters,
- Eliminieren aller Scanmuster, bei denen das Minimum der Differenzen gleich eins ist,
- Selektieren des geeigneten Scanmusters durch ein Auswahlkriterium, bei dem Maximum und Minimum der Differenzen der Abtastzahlen möglichst nahe beieinander liegen.

Die Selektion des geeigneten Scanmusters erfolgt vorzugsweise durch Vergleichen der Differenzen von Maximum und Minimum jedes Scanmusters, wobei das Scanmuster mit der kleinsten Differenz aus Maximum und Minimum der Abtastzahlendifferenzen ein Optimum darstellt.
Ein weiteres zweckmäßiges und schärferes Kriterium für die Selektion des geeigneten Scanmusters ergibt sich durch Vergleichen der Quotienten aus Minimum und Maximum jedes Scanmusters, indem das Scanmuster mit dem größten Verhältnis von Minimum zu Maximum der Abtastzahlendifferenzen als optimal ausgewählt wird.

Kernpunkt der Erfindung ist eine Neuorganisation der herkömmlichen Microscan-Verfahren durch Abkehr von der mäanderförmigen Schrittfolge der Scanpositionen im Scanraster. Die Erfindung basiert auf der Erkenntnis, dass die Sensorbewegung in linear langgestreckten Mäanderbahnen die Bildung von Artefakten fördert, wenn leichte Objektbewegungen nicht ausgeschlossen werden können. Die Erfindung löst diesen Konflikt zwischen weg- und zeitoptimierter Abtastbewegung und Artefaktbildung durch
- Vermeidung direkter zeitlicher Aufeinanderfolge örtlich benachbarter Scanpositionen während der Scanbewegung,
- Verringerung der maximalen zeitlichen Abstände der Einzelpositionen im Scanraster,
- Vermeidung einer Vorzugsrichtung bei der Bewegung des Bildsensors und somit Verminderung der Bildung von Zeilensprüngen im Ergebnisbild.

Mit Hilfe der Erfindung ist es möglich, eine Aufnahme von zweidimensionalen Bildern mit auflösungserhöhender zweidimensionaler Sensorbewegung zu realisieren, die mit einfachen Mitteln eine deutliche Verringerung von Bildstörungen, die durch leichte Objektbewegung während der Scanbewegung des Bildsensors entstehen, erreicht. Das Verfahren ist für alle verfügbaren Bildaufnehmer, die zur Auflösungserhöhung den Bildsensor in einem definierten Scanraster (2x2, 3x3, 3x4, 4x4 o.ä.) bewegen, leicht integrierbar. Dazu ist lediglich ein Software-Update erforderlich und (einmalig) eine Rekalibrierung des Scanners mit dem neuen Scanmuster durchzuführen.

Die Erfindung soll nachstehend anhand von Ausführungsbeispielen näher erläutert werden. Die Zeichnungen zeigen:
- Fig. 1:: eine Prinzipdarstellung eines erfindungsgemäßen Scanmusters anhand einer schematischen zeitlichen Abfolge von 12 Scanschritten bei einem gewählten 3x4-Scanraster,
- Fig. 2a:: eine Prinzipdarstellung für einen 2x2-Mircroscan gemäß dem Stand der Technik,
- Fig. 2b:: eine Prinzipdarstellung für einen 2x2-Mircroscan gemäß dem Stand der Technik,
- Fig. 2c:: ein Scanmuster für einen 3x4-Microscan mit herkömmlicher Mäanderabtastung nach dem Stand der Technik,
- Fig. 3:: eine Darstellung der zeitlichen Abstände der Scanpositionen beim herkömmlichen Mäander-Scanmuster für einen 3x4-Microscan,
- Fig. 4:: eine Darstellung zur Erläuterung der Gleichwertigkeit von Permutationen mit unterschiedlicher Startposition des Scans,
- Fig. 5:: einen möglichen Programmablaufplan für das erfindungsgemäße Verfahren zur Erzeugung geeigneter Scanmuster,
- Fig. 6: einen weitere Variante eines Programmablaufs für das erfindungsgemäße Verfahren zur Erzeugung des objektiv besten Abtastmodus,
- Fig. 7:: eine Darstellung der Klasseneinteilung der verfügbaren Scanmuster für einen 3x4-Scan,
- Fig. 8:: eine Klasseneinteilung der verfügbaren Scanmuster für einen 3x3-Scan,
- Fig. 9:: eine Ergebisdarstellung des besten Scanmusters aus Fig. 7 nach Selektion gemäß dem Ablaufplan nach Fig. 6,
- Fig. 10:: eine Ergebnisdarstellung des besten Scanmusters aus Fig. 8,
- Fig. 11:: eine Gegenüberstellung der Ergebnisbilder bei Anwendung eines 3x4-Scans gemäß Fig. 3 und Fig. 9.

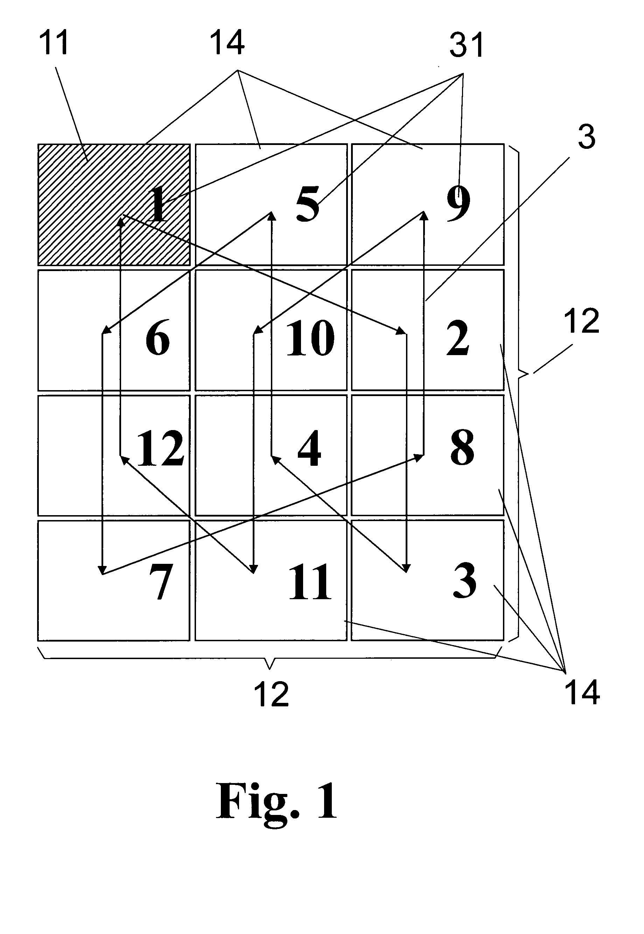

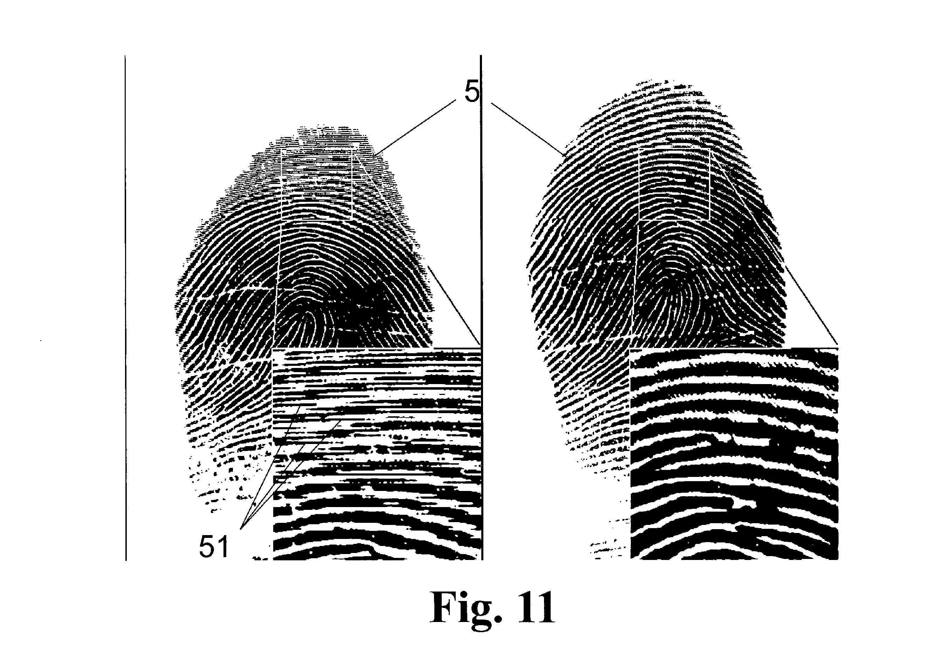

Die erfindungsgemäße Einrichtung besteht aus einem Bildsensor, der mittels eines Scanmechanismus (nicht dargestellt) in einem vorgegebenen Scanraster 12 - wie in Fig. 1 schematisch als 3x4-Scanraster dargestellt - mit einem Scanmuster 3, bei dem nicht der kürzeste Verschiebeweg des Bildsensorelements 11 das Ziel. der auflösungserhöhenden Sensorbewegung ist, sondern die Vermeidung zeitlich direkter Aufeinanderfolgen von örtlich benachbarten Scanpositionen 14. Die Scanpositionen 14 werden in der Darstellung von Fig. 1 durch aneinandergereihte Positionen eines ausgewählten Sensorelementes 11 verkörpert, wobei durch Abtastzahlen 31 die laufende Nummerierung der Scanschritte 13 über der Zeit dargestellt ist. Angemerkt werden soll an dieser Stelle, dass die Aneinanderreihung der Scanpositionen 14 nur der Vereinfachung dient und real häufig eine örtlich Überlappung der Scanpositionen 14 vorgesehen ist.
Die Unterdrückung von (nur in Fig. 11 dargestellten) Artefakten 51 im Ergebnisbild 2 (vgl. Fig. 2b), das in Fig. 1 nur für ein Sensorelement 11 dargestellt ist, gelingt gemäß der Erfindung dann am Besten, wenn eine möglichst weitgehende Gleichverteilung der zeitlichen Abstände (Differenzen der Abtastzahlen 31) zwischen den örtlich benachbarten Scanpositionen 14 vorhanden ist. Eine solche optimierte Möglichkeit für das als Linienzug mit Pfeilen dargestellte Scanmuster 3 ist in Fig. 1 für ein 3x4-Scanraster 12 gezeigt.

Bei herkömmlicher Aufnahme von Bildern mit mäanderförmigem Abtastmodus - wie sie in verschienen Varianten in den Figuren 2a bis 2c dargestellt sind - wurde festgestellt, dass ausgeprägte linienartige Strukturen (siehe Fig. 11 linke Darstellung) entstehen, wenn sich das aufgenommene Objekt (hier: Fingerabdruck) während der Aufnahme minimal bewegt. Diese linienartigen Artefakte 51 resultieren aus der direkten zeitlichen Nachbarschaft der einzelnen Ergebnis-Bildpunkte in Längsrichtung der mäanderförmigen Abtastbahn (x-Richtung) sowie aus den großen zeitlichen Abständen der Bildpunkte im Ergebnisbild 2 in Vortriebsrichtung der Mäander (y-Richtung).
Der zeitliche Abstand der Scanpositionen 14 wird in Fig. 1 durch die Differenz 32 der Abtastzahlen 31 (laufende Nummer eines Scanschrittes 13) von in x- und in y-Richtung örtlich benachbarten Ergebnisbildpunkten des Sensorelementes 11 definiert. Wenn man z.B. eine Bildzeit von 100 Millisekunden annimmt, dann ergibt sich als zeitlicher Abstand zwischen erster und letzter (n-ter) Scanposition ein maximaler zeitlicher Abstand von (n-1) 100 ms für den Einzug eines kompletten Ergebnisbildes.

Fig. 2a soll zunächst das herkömmliche Abtastprinzip von Bildaufnehmern mit einem Macroscan verdeutlichen. Das Ziel des Macroscans besteht darin, dass der vom Bildsensor 1 abgetastete Bildausschnitt schrittweise über eine sehr viel größere Bildfläche eines Objektes verschoben wird. Durch die Aneinanderreihung der abgetasteten Bildausschnitte von der Größe des gesamten Bildsensors 1 mit der Kantenlänge a entsteht das Ergebnisbild 2, das in diesem Fall aus einem 2x2-Macroscan zusammengesetzt ist. Der Betrag des Verschiebeweges |s| zwischen den Positionen des Bildsensors 1, der auch für die beiden Dimensionen des Bildsensors 1 verschieden sein kann, beträgt jeweils eine Kantenlänge a des Bildsensors 1 in unterschiedlicher Richtung. Da dieser Verschiebevorgang aus dem Ergebnisbild leicht erkennbar ist, wurde im linken Teil von Fig. 2a nur der zeitliche Verlauf der Abtastung entlang der Zeitachse t dargestellt.
In Fig. 2b ist der Stand der Technik für die Bildabtastung mittels eines Microscans vom Format 2x2 dargestellt. Der Bildsensor 1 besteht beispielsweise aus 4x4 Sensorelementen 11 und wird um den halben Pixelabstand p/2 verschoben. Das Ergebnisbild 2, das durch die sogenannte Verkämmung der ausgelesenen Signale entsteht, weist infolge des gewählten Verschiebeweges, der als Scanmuster 3 für das vierte Sensorelement 11 der ersten Zeile eingezeichnet ist, eine vierfach erhöhte Pixeldichte und damit verbesserte Auslösung auf.
In Fig. 2c ist der gleiche Sachverhalt von Fig. 2b nochmals als 3x4-Microscan aufgezeigt, um die Struktur des Scanmusters 3 nach dem Stand der Technik besser zu verdeutlichen. Dabei laufen die einzelnen Scanschritte 13 geordnet im Scanraster 12 ab, wobei neben dem Schema der nacheinander angefahrenen Scanpositionen 14, deren zeitliche Abfolge durch die Abtastzahlen 31 gekennzeichnet ist, nochmals die Bahnkurve der Scanschritte 13 zur Verdeutlichung des Scanmusters 3 hervorgehoben wurde.

Die weiteren Überlegungen zur Herausarbeitung der erfinderischen Idee werden exemplarisch - ohne Beschränkung der Allgemeinheit - anhand eines 3x4-Scanrasters 12 (drei Positionen in x-Richtung, vier Positionen in y-Richtung) fortgeführt.

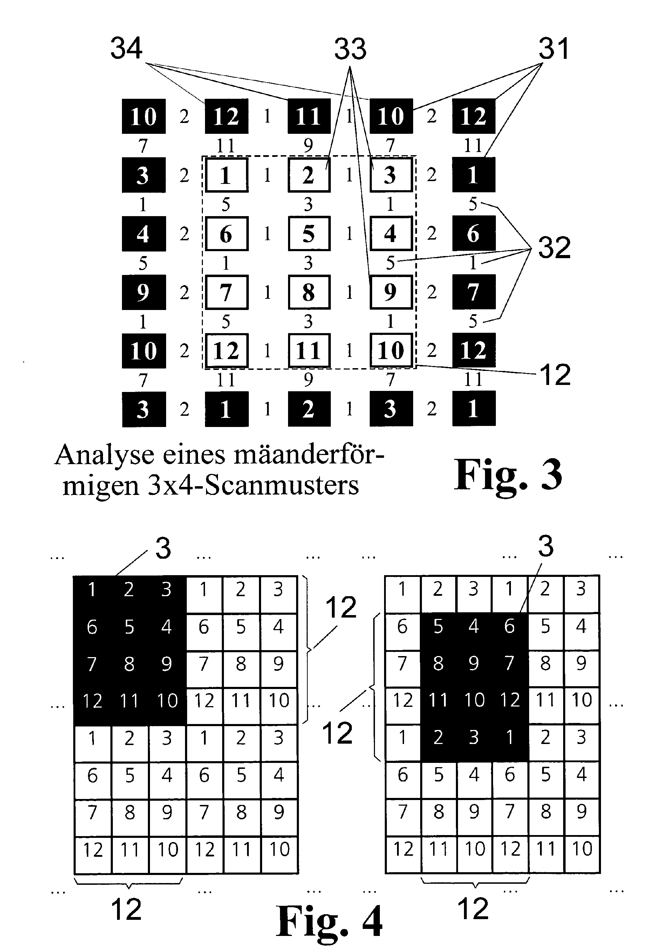

In Fig. 3 werden nochmals die zeitlichen Abstände der Scanpositionen 14 eines Sensorelements 11 in x- und y-Richtung für den mäanderförmigen 3x4-Scan gemäß dem Stand der Technik analysiert. Dabei stellen die umrandeten weißen Felder die zwölf verschiedenen Scanpositionen 33 für ein ausgewähltes Sensorelement 11 des Bildsensors 1 dar, wobei die angegebene Abtastzahl 31 die laufende Nummer der Scanschritte 13 innerhalb eines Abtastzyklus, d.h. die zeitliche Reihenfolge der Scanpositionen 14 angibt. Die schwarzen Felder widerspiegeln die Scanpositionen 34 von benachbarten Sensorelementen 11, die - infolge der Bewegung des gesamten Bildsensors 1 - im gleichen mäanderförmigen Muster bewegt werden. Die Zahlen zwischen den Feldern geben jeweils den zeitlichen Abstand der benachbarten Scanpositionen 14, d.h. die Differenz 32 der Abtastzahlen 31, als Anzahl der dazwischen vollzogenen Scanschritte 13 an. Dieser zeitliche Abstand (Differenz 32) der Scanschritte 13 im Abtastzyklus ist als Maß für die Anfälligkeit der Abtastung gegenüber einer Bewegung des abgebildeten Objekts zu betrachten. Je kleiner diese Differenz 32 für viele der benachbarten Scanpositionen 14 ist, desto höher müssen zwangsläufig die Differenzen 32 an anderen Stellen sein und desto größer ist die Wahrscheinlichkeit der Artefaktbildung infolge einer (willkürlichen) Objektbewegung. Das ist damit zu erklären, dass innerhalb eines Abtastzyklus sowohl Doppelabtastungen desselben Objektpunktes als auch Fehlabtastungen anderer Objektpunkte aufgrund der Objektbewegung nebeneinander auftreten.
Aus Fig. 3 erkennt man somit für einen herkömmlichen mäanderförmigen 3x4-Scan:
1. eine starke Ausprägung von zeitlichen Nachbarschaften der Scanpositionen in x-Richtung (erkennbar als Differenzen 32 vom Wert Eins in x-Richtung, d.h. durch jeweils einen Abtastschritt 13 zwischen den Scanpositionen 33 des ausgewählten Sensorelements 11 in Zeilenrichtung) und
2. einen maximalen zeitlichen Abstand (Differenz 32) von elf Scanschritten 13 in y-Richtung:
   - zwischen zwölfter und erster Scanposition 33 des ausgewählten Sensorelements 11,
   - zwischen erster Scanposition 33 des ausgewählten und zwölfter Scanposition 34 des oben benachbarten Sensorelements 11 sowie
   - zwischen zwölfter Scanposition 33 des ausgewählten und erster Scanposition 34 des unteren benachbarten Sensorelements 11.

Dies begünstigt die Ausbildung von Artefakten, die sich als Störung in Form von horizontalen Linienstrukturen (linienförmige Artefakte 51 in Fig. 11) zeigen.
Aus diesem Grund wird von der herkömmlichen geordneten Abtastung in einem mäanderförmigen Scanmuster (kürzester Weg des Bildsensors 1 beim Abarbeiten aller Scanpositionen 14) abgegangen und eine annähernde Gleichverteilung der zeitlichen Abstände zwischen benachbarten Scanpositionen 14 im Scanraster 12 angestrebt. Dazu muss ein geeignetes Scanmuster 3 gefunden werden, das dieser Forderung gerecht wird.
Dies geschieht, indem zunächst werden alle Permutationen der Scanpositionen 14 im gewünschten Scanraster (z.B. 3 x 4-Scanraster) gebildet, um alle möglichen Scanmuster 3 zu erfassen.
Zur Klassifizierung der Scanmuster 3 wird die Bezeichnung (Maximum, Minimum) verwendet, wobei das Maximum 42 die maximale zeitliche Differenz 32 und das Minimum 41 die minimale zeitliche Differenz 32 aller Abtastzahlen 31 von räumlich benachbarten Scanpositionen 33 eines ausgewählten Sensorelements 11 sind und das Minimum der Differenzen 32 zur Einteilung der Scanmuster 3 in Klassen verwendet wird. Für das herkömmlich verwendete mäanderförmige Scanmuster 3 ergibt sich somit - wie man leicht aus Fig. 3 ablesen kann - die Bewertung (11,1).

Zur Untersuchung von unterschiedlichen Scanmustern 3 wurde ein Algorithmus entwickelt, mit dem alle möglichen Positionsfolgen systematisch durchgerechnet werden können. Vereinfachend darf dabei angenommen werden, dass die erste Scanposition 14 mit der Abtastzahl "1" stets in der linken oberen Ecke des Scanmusters 3 liegt. Das ist deshalb möglich, weil ein Ergebnisbild 2 als direkte Zusammensetzung mehrerer nebeneinander liegender Scanmuster 3 verstanden werden muss.
Wie aus Fig. 4 anhand eines Beispiels für das mäanderförmig abgetastete 3x4-Scanraster ersichtlich ist, sind (unter Vernachlässigung des Bildrandes) mehrere äquivalente Scanmuster 3 möglich, wenn die geordnete Mäanderabtastung nicht vorgeschrieben ist. Dies ist der Ansatz der Erfindung, so dass die Gleichwertigkeit dann gewährleistet ist, wenn auch die Anschlussbedingungen des Scanmusters 3 eines Sensorelements 11 zu den angrenzenden gleichen Scanmustern 3 der benachbarten Sensorelemente 11 des Bildsensors 1 mit berücksichtigt werden. Diese Betrachtung wurde bei der Analyse des 3x4-Scans gemäß dem Stand der Technik bereits in Fig. 3 zugrunde gelegt, um zu den Ursachen der Artefakte 51 vorzudringen.

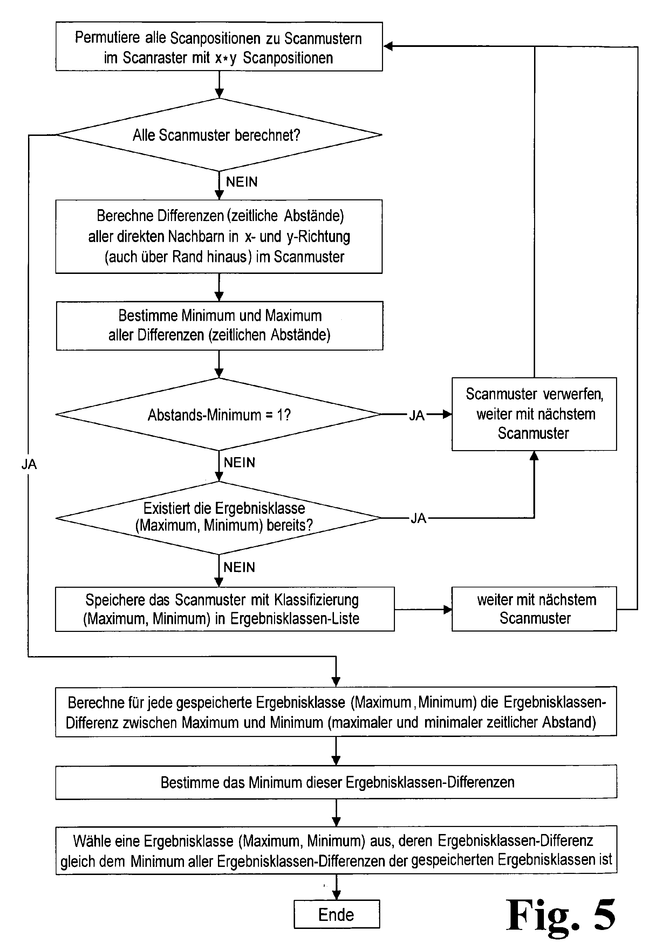

Der Algorithmus zur Bestimmung eines erfindungsgemäßen Scanmusters 3 enthält - wie in Fig. 5 angegeben - folgende Schritte:
1. Bilde Scanmuster 3 für ein ausgewähltes Sensorelement 11 des Bildsensors 1 über alle Permutationen von n x m Scanpositionen 14 für ein vorgegebenes Scanraster 12, wobei die zeitliche Reihenfolge der Scanpositionen 14 durch eine Abtastzahl 31 gekennzeichnet wird.
2. Berechne für jedes Scanmuster 3 alle Differenzen 32 der Abtastzahlen 31 benachbarter Scanpositionen 14 in x-Richtung und in y-Richtung des Scanrasters 12.
3. Bestimme Minimum 41 und Maximum 42 aller Differenzen 32 von Abtastzahlen 31 zur Klassifikation jedes Scanmusters 3,
4. Eliminiere alle Scanmuster 3, bei denen das Minimum 41 der Differenzen 32 gleich eins ist,
5. Selektiere als geeigneten Abtastmodus das Scanmuster 3, bei dem Maximum 42 und Minimum 41 der Differenzen 32 der Abtastzahlen 31 möglichst nahe beieinander liegen.

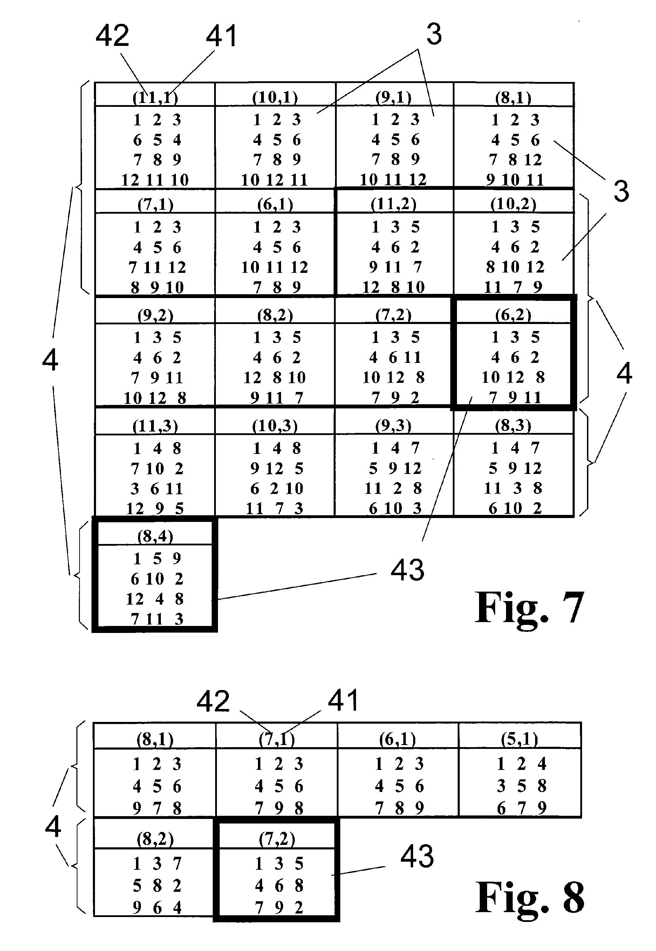

Dabei kann die Selektion von geeigneten Scanmustern 3 einerseits durch:
5.1 Vergleich der Differenzen aus Maximum 42 und Minimum 41 der klassifizierten Scanmuster 3, wobei Scanmuster 3 mit der kleinsten Differenz aus Maximum 42 und Minimum 41 als geeignet ausgewählt werden,
erfolgen. Mit Hilfe des Verfahrens gemäß Fig. 5 wurden die in den Figuren 7 und 8 dick umrandeten Klassen 4 als optimierte Scanmuster 43 ermittelt, für die die aufgestellten Kriterien, unter Verwendung der Spezifizierung von 5.1, erfüllt werden.

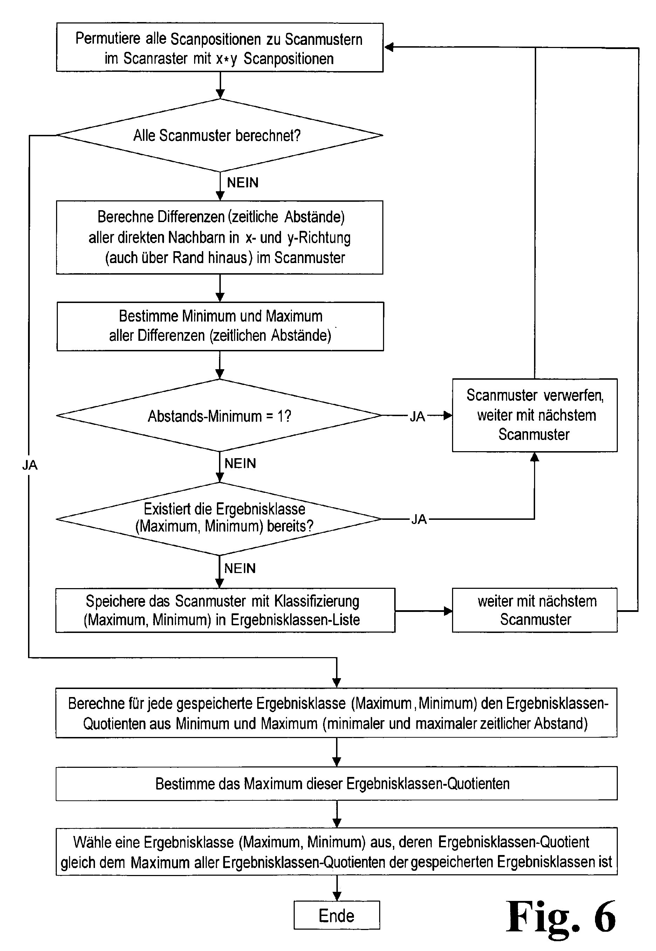

Andererseits kann als schärferes Kriterium die Selektion durch:
5.2 Vergleich der Quotienten aus Minimum 41 und Maximum 42 der klassifizierten Scanmuster 3, wobei der größte Quotient das am besten geeignete Scanmuster 3 kennzeichnet,
erfolgen. Den dazu erforderlichen Programmablauf gibt Fig. 6 an.

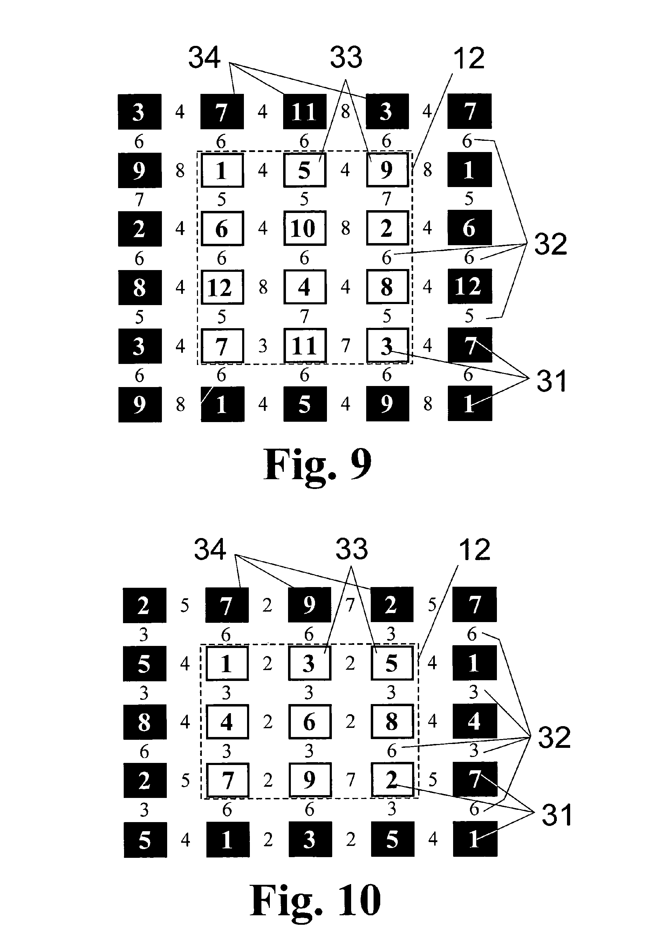

Fig. 7 zeigt die Liste der Scanmuster-Klassen nach den vorstehenden Vorschriften des 1. bis 3. Schrittes des Algorithmus für das 3x4-Scanraster 12. Die Scanpositionen 33 eines ausgewählten Sensorelements 11 wurden von 1 bis 12 nummeriert. Dabei soll bei den durch Permutationen der Scanpositionen 33 entstandenen Scanmustern 3 eine Scanmuster-Klasse 4 durch die minimale Differenz 32 der Abtastzahlen 31 benachbarter Scanpositionen 33 gekennzeichnet werden.
Die Klasse 4 von Scanmustern 3, die als Minimum 41 der Differenzen 32 den Wert Eins aufweist, wird im 4. Schritt des Verfahrens sofort verworfen, damit direkte Nachbarschaften der Scanpositionen 33 (auch beim Übergang auf Scanpositionen 34, vergleiche Fig. 9) ausgeschlossen werden. Dieser Klasse 4 mit der Kennzeichnung (k, 1 ), gehören sechs Scanmuster 3 an.
In der nächsten Klasse 4, bei der das Minimum 41 der Differenz 32 der Abtastzahlen 32 gleich zwei ist (Kennzeichnung (k,2), sind ebenfalls sechs Scanmuster 3 angegeben. Die weiteren Klassen 4 mit den Kennzeichnungen (k,3) und (k,4) sind mit vier bzw. einem Scanmuster 3 vertreten. Entsprechend der obigen Selektionsvorschrift (5. Schritt) weisen die Scanmuster (6,2) und (8,4) die größte Nähe von Minimum und Maximum der Abtastzahl-Differenzen auf.
Entscheidet man nun mit einem Differenz-Kriterium zwischen Maximum und Minimum, sind beide Scanmuster (6,2) und (8,4) gleich und können nach Belieben für die Programmierung des Scanmechanismus des Bildsensors 1 ausgewählt werden.

Will man das gesamte Verfahren der Erzeugung des geeigneten Scanmusters 3 objektiv und automatisch ausgeführt haben, werden als Auswahlkriterium für das beste Scanmuster 3 die Verhältnisse von Minimum 41 zu Maximum 42 jedes Scanmusters 3 (vgl. Fig. 7) gebildet und die Klasse 4 mit Kennzeichnung (8,4) und dem größten Quotienten 4/8 = 1/2 extrahiert gegenüber der Klassifizierung (6,2) 2/6 = 1/3, die beim Vergleich der Differenzen aus Maximum und Minimum der Klassifizierung noch als gleichwertig in Erscheinung getreten war.

Fig. 8 zeigt zur erweiternden Erläuterung die Scanmuster-Klassen 4 für ein 3x3-Scanraster. Die Scanpositionen 33 gemäß Fig. 10 sind in diesem Fall mit 1 bis 9 nummeriert. Als Klasseneinteilung ergeben sich durch die Permutationen der Reihenfolge der Scanpositionen 33 lediglich zwei Klassen 4 mit vier bzw. zwei vertretenen Scanmustern 3, von denen die erste Klasse (k,1) durch die oben angegebene 4. Verfahrensvorschrift entfällt. Die verbleibenden zwei Scanmuster 3 der zweiten Klasse 4 mit der Kennzeichnung (k,2) haben die Klassifizierungen (8,2) und (7,2) und ergeben bei Anwendung jedes der Selektionsschritte 5.1 oder 5.2 die Klassifizierung (7,2) als optimiertes Scanmuster 43.

In Fig. 9 ist das erfindungsgemäß optimierte Abtastmuster 43 für ein 3x4-Scanraster 12 durch Kennzeichung der Scanpositionen 33 und 34 mit Abtastzahlen 31 und Angabe von Differenzen 32 (als zeitliche Abstände) der örtlich benachbarten Scanpositionen 33 und 34 dargestellt. Fig. 9 ist schematisch in derselben Art und Weise wie Fig. 3 angelegt und verkörpert eine dem erfindungsgemäßen Scanmuster 3 von Fig. 1 äquivalente Darstellung. Die deutlich verbesserte Abtastqualität des Scanmusters 3 von Fig. 9 gegenüber Fig. 3 (Mäanderscan gemäß dem Stand der Technik) ist in Fig. 11 erkennbar. Hier sind die Bilder zweier Aufnahmen mit einem Microscan im 3x4-Scanraster, bei denen sich der abgebildete Finger minimal bewegt hat, mit den unterschiedlichen Scanmustern 3 (nach Fig. 3 und 9) erfasst worden. Die linke Aufnahme wurde dabei mit mäanderförmiger Abtastung [im Klassenschema von Fig. 7: unter Verwendung des Scanmusters 3 mit der Klassen-Kennzeichnung (11,1)] aufgenommen und zeigt deutlich sichtbare lineare Artefakte 51. Die rechte Abbildung wurde unter Verwendung des Scanmusters 43 mit Klassifizierung (8,4) aus Fig. 7 erstellt. Es ist ersichtlich, dass mit dem in der Erfindung dargestellten Verfahren die stark ausgeprägten falschen Linienstrukturen bzw. linearen Artefakte 51 des abgebildeten Fingerabdrucks 5 nicht mehr (wie in der linken Abbildung von Fig. 11) auftreten und das Verfahren somit ein deutlich besseres Verhalten gegenüber Bewegungen des Objektes zeigt.
Somit lässt sich mit der Erfindung eine erhebliche Verbesserung von Bildaufnahmegeräten, die einen Microscan zur Auflösungserhöhung einsetzen, bezüglich Anfälligkeit gegen Bildfehler durch geringe Objektbewegung erreichen.
Gleiches ist prinzipiell auch für Macroscan-Abtastungen zutreffend, obwohl hierbei die Zulässigkeitsgrenzen einer (unerwünschten) Objektbewegung infolge der großen Abtastwege (Kantenlänge a des Bildsensors 1) von vornherein sehr viel enger zu setzen sind.

Das erfindungsgemäße Verfahren ist mit relativ geringem Aufwand durch Überarbeitung der Treibersoftware eines scannenden Bildsensors 1 sowie einmalige Rekalibrierung der Bildaufnahme mit dieser neuen Software für alle bisher bekannten optisch scannenden Bildaufnehmer anwendbar. Der Anwendung des erfindungsgemäßen Verfahrens zur Erzeugung eines geeigneten Scanmusters 3 sind durch andere, als die oben angegebenen Scanraster 12 keinerlei Grenzen gesetzt, sodass für jeden beliebigen zweidimensionalen Scanmodus ein optimiertes Scanmuster 43 gefunden werden kann, das als eine in Software gespeicherte Abtastkonfiguration das Wesen und die Qualität des Bildaufnehmers bestimmt.

### Bezugszeichenliste

- 1: Bildsensor
- 11: Sensorelement
- 12: Scanraster
- 13: Scanschritt
- 14: Scanposition

- 2: Ergebnisbild

- 3: Scanmuster
- 31: Abtastzahl
- 32: Differenz der Abtastzahlen
- 33: Scanpositionen eines ausgewählten Sensorelements
- 34: Scanpositionen der benachbarten Sensorelemente

- 4: Klassen (von permutierten Scanpositionen)
- 41: Minimum (der Abtastzahlen-Differenzen)
- 42: Maximum (der Abtastzahlen-Differenzen)
- 43: optimiertes Scanmuster

- 5: Fingerabdruck
- 51: linienförmige Artefakte

## Patentansprüche

1. Einrichtung zur Aufnahme von hochaufgelösten zweidimensionalen Bildern, bei der für eine auflösungserhöhende Vervielfachung der abgetasteten Bildpunkte ein Scanmechanismus zur zweidimensionalen Bewegung des Bildsensors vorhanden ist, **dadurch gekennzeichnet, dass**
- bei einem gewählten Scanraster (12) mit n Scanpositionen (14) in x-Richtung und m Scanpositionen (14) in y-Richtung ein Scanmuster (3) für die Sensorbewegung vorhanden ist, das eine feste Reihenfolge der angefahrenen Scanpositionen (14) für jedes der Sensorelemente (11) aufweist, wobei für örtlich benachbarte Scanpositionen (14) in x-Richtung und in y-Richtung jeweils ein zeitlicher Abstand (32) von mindestens zwei Scanschritten (13) vorhanden ist.

2. Einrichtung nach Anspruch 1, **dadurch gekennzeichnet, dass**
das Scanmuster (3) für ein vorgegebenes Scanraster (12) so optimiert wird, dass die zeitlichen Abstände (32) zwischen jeweils örtlich benachbarten Scanpositionen (14) in x- und in y-Richtung im gesamten Scanmuster (3) ein Maximum (42) und ein Minimum (41) aufweisen, die möglichst nahe beieinander liegen.

3. Verfahren nach Anspruch 1, **dadurch gekennzeichnet, dass**
das Scanmuster (3) für einen vorgegebenen n x m-Microscan eingesetzt wird, wobei n und m die Anzahl der Scanpositionen (14) in Zeilen- und Spaltenrichtung eines vorgegebenen Scanrasters (12) sind.

4. Verfahren nach Anspruch 1, **dadurch gekennzeichnet, dass**
das Scanmuster (3) für einen vorgegebenen n x m-Macroscan verwendet wird, wobei n und m die Anzahl der Scanpositionen (14) in Zeilen- und Spaltenrichtung eines vorgegebnen Scanrasters (12) sind.

5. Einrichtung nach Anspruch 1, **dadurch gekennzeichnet, dass**
das Scanmuster (3) in die Ansteuersoftware für den Scanmechanismus des Bildsensors (1 ) integriert ist.

6. Verfahren zum Erzeugen eines optimalen Scanmusters für zweidimensional abtastende Bildaufnahmesysteme, bei dem eine Auflösungserhöhung durch Bewegung des Bildsensors in einem bestimmten Scanraster erfolgt und bewegungsbedingte Artefakte unterdrückt werden, **gekennzeichnet durch** folgende Schritte:
- Aufstellen aller möglichen Scanmuster (3) für den Bildsensor (1) über alle Permutationen von n x m Scanpositionen (14) für ein vorgegebenes Scanraster (12), wobei die zeitliche Reihenfolge der Scanpositionen (14) **durch** eine Abtastzahl (31) als laufende Nummer des Scanschrittes (13) **gekennzeichnet** wird,
- Berechnen aller Differenzen (32) der Abtastzahlen (31) benachbarter Scanpositionen (14) für jedes Scanmuster (3) in x-Richtung und in y-Richtung des Scanrasters (12),
- Bestimmung von Minimum (41) und Maximum (42) aller Differenzen (32) von Abtastzahlen (31 ) zur Klassifikation (4) jedes Scanmusters (3),
- Eliminieren alle Scanmuster (3), bei denen das Minimum (41) der Differenzen (31) gleich eins ist,
- Selektieren des geeigneten Scanmusters (3) **durch** ein Auswahlkriterium, bei dem Maximum (42) und Minimum (41) der Differenzen (32) der Abtastzahlen (31) möglichst nahe beieinander liegen.

7. Verfahren nach Anspruch 6, **dadurch gekennzeichnet, dass**
die Selektion des geeigneten Scanmusters (3) durch Vergleichen der Differenzen von Maximum (42) und Minimum (41) jedes Scanmusters (3) erfolgt, wobei das Scanmuster (3) mit der kleinsten Differenz aus Maximum (42) und Minimum (41) der Abtastzahlen-Differenzen (32) ein Optimum darstellt.

8. Verfahren nach Anspruch 6, **dadurch gekennzeichnet, dass**
die Selektion des geeigneten Scanmusters (3) durch Vergleichen der Quotienten aus Minimum (41) und Maximum (42) jedes Scanmusters (3) erfolgt, wobei das Scanmuster (3) mit dem größten Verhältnis von Minimum (41) zu Maximum (42) der Abtastzahlen-Differenzen (32) als optimal ausgewählt wird.
